# EUROPÄISCHE PATENTSCHRIFT

(11) **EP 1 067 571 B1**
(45) Veröffentlichungstag und Bekanntmachung des Hinweises auf die Patenterteilung: **14.04.2004**
(21) Anmeldenummer: 00112456.9
(22) Anmeldetag: 10.06.2000
(51) Int. Cl.: H01H 50/02, H01H 47/00

(54) **Relaisbauteil**
Relay module
Module de relais

(30) Priorität: 05.07.1999 DE 19930521
(43) Veröffentlichungstag der Anmeldung: 10.01.2001
(73) Patentinhaber: Volkswagen Aktiengesellschaft, 38436 Wolfsburg (DE)
(72) Erfinder: Müller, Uwe, 38550 Isenbüttel (DE); Minke, Andreas, 38518 Gifhorn (DE)
(74) Vertreter: Banzer, Hans-Jörg, Dipl.-Ing.

(56) Entgegenhaltungen:
- DE-A- 3 512 110
- DE-B- 1 004 705
- GB-A- 2 341 729
- US-A- 4 104 620
- US-A- 4 914 315
- US-A- 4 969 062
- US-A- 5 455 733
- PATENT ABSTRACTS OF JAPAN vol. 014, no. 383 (E-0966), 17. August 1990 (1990-08-17) & JP 02 142025 A (NEC YAMAGATA LTD), 31. Mai 1990 (1990-05-31)

## Beschreibung

Die Erfindung geht aus von einem Relaisbauteil gemäß dem Oberbegriff des Anspruchs 1, insbesondere zum Schalten von hohen Strömen in einem Kraftfahrzeug.

In einem Kraftfahrzeug müssen in zunehmenden Maße Ströme in der Größenordnung von 10 bis 70 Ampere ein- oder ausgeschaltet werden. Das Ein- und Ausschalten solcher Ströme kann zum Teil sicherheitsrelevant sein. Wenn zum Beispiel in einem bestimmten Zeitpunkt das notwendige Einschalten eines Stromes aufgrund eines Fehlers in einer Steuerschaltung oder eines mechanischen Defektes an dem Relais nicht erfolgt oder zum Beispiel der Strom durch Kontaktverkleben nicht ausgeschaltet wird, können die Betriebssicherheit des Fahrzeugs und die Sicherheit des Fahrers gefährdet sein.

Es ist daher bekannt, die einwandfreie Funktion eines Relais zu überwachen. Hierzu ist vorzugsweise eine Klemme des Relaiskontaktes über eine Sensorleitung mit einer Steuerschaltung verbunden, die die Spannung an der Klemme überwacht. Wenn zum Beispiel diese Spannung bei Betätigung des Relais nicht auftritt oder beim Abschalten des Relais nicht wegfällt, kann ein entsprechendes Signal für eine Anzeige, eine spezielle Aufforderung an den Fahrer, eine Gegenmaßnahme oder für eine Speicherung in einem Rechner erzeugt werden.

Aus der DE 1 004 705 AS ist eine Vorrichtung gemäß dem Oberbegriff des Anspruchs 1 bekannt. Eine derartige Schaltung hat den Nachteil, dass die Spannung an der Sensorleitung lediglich den Zustand eines zusätzlichen Kontaktes widerspiegelt, nicht jedoch den Zustand der eigentlichen Arbeitskontakte. Bei einer Fehlfunktion des Relais ist beispielsweise vorstellbar, dass die Arbeitskontakte geschlossen werden, der zusätzliche Kontakt jedoch nicht. Auch der umgekehrte Fall ist denkbar.

Aus der Druckschrift Patent Abstracts of Japan vol. 014, no. 383 (E-0966) ist eine Schaltungsanordnung bekannt, durch welche überwacht wird, ob an den Anschlüssen für einen durch einen Arbeitskontakt des Relais zu schaltenden Strom eine zu hohe Spannung anliegt. Ist dies der Fall, lässt sich bei der dort vorgestellten Schaltung das Relais nicht einschalten, und es wird ein Warnsignal ausgegeben. Es findet allerdings keine generelle Überwachung der Stellung des Arbeitskontaktes des Relais statt.

Bei einem Relais mit einer derartigen Sensorleitung kann folgendes Problem auftreten: Die Leitungen für den durch das Relais zu schaltenden Strom haben wegen der hohen Stromstärken einen Querschnitt in der Größenordnung von 10 mm², während die Sensorleitungen einen Leitungsquerschnitt in der Größenordnung von 0,35 mm² aufweisen. Da die Sensorleitung direkt an eine Klemme des Arbeitskontaktes des Relais angeschlossen ist, kann zum Beispiel bei einem Kurzschluß oder einer ungewünschte Erdung innerhalb der Sensorleitung ein mit 60 A abgesichertes Stromnetz einen Strom in der Sensorleitung verursachen, für den der Querschnitt der Sensorleitung nicht ausreicht. Die Sensorleitung kann dann durchbrennen und möglicherweise eine Brandgefahr auslösen.

Es ist daher bekannt, in die zum Relaisbauteil führende Sensorleitung ein strombegrenzendes Schaltungselement einzufügen, zum Beispiel einen sogenannten Polyswitch oder einen genügend hochohmigen Widerstand, das für die Sensorleitung gefährlich hohe Ströme verhindert. Ein derartiges Schaltungselement sowie seine Halterung und Kontaktierung mit dem Hauptstromkreis stellen einen zusätzlichen Aufwand dar.

Der Erfindung liegt die Aufgabe zugrunde, den Aufwand für eine derartige Strombegrenzung zu verringern und die Betriebssicherheit des Systems zu erhöhen.

Diese Aufgabe wird durch die im Anspruch 1 angegebene Erfindung gelöst. Vorteilhafte Weiterbildungen der Erfindung sind in den Unteransprüchen angegeben.

Bei der Erfindung wird also ein strombegrenzendes Schaltungselement, wie zum Beispiel der genannte Polyswitch oder ein ohmscher Widerstand, in das Relaisbauteil hinein verlegt. Dadurch ergeben sich mehrere Vorteile. Zunächst ergibt sich eine Einsparung von Einzelkomponenten wie zum Beispiel der Zuleitung zu dem Relaisbauteil, der kritische Schweißpunkt zwischen Drähten mit einem Querschnitt von zum Beispiel 10 mm² und 0,35 mm² extern zu dem IC. Auch kann das Relaisbauteil nicht versehentlich ohne Schutzmaßnahmen für die Sensorleitung betrieben werden, weil nunmehr der Schutz zwangsläufig in dem Relaisbauteil integriert ist. Insbesondere werden also verschiedene Probleme, die sonst extern zum Relaisbauteil auftreten, verringert oder vermieden.

Das strombegrenzende Schaltungselement kann grundsätzlich durch einen genügend hochohmigen ohmschen Widerstand gebildet sein. Statt eines Widerstandes kann auch ein unter dem Warenzeichen Polyswitch bekanntes Element eingesetzt werden. Das ist ein Schaltungselement aus Polymerkunststoff, in dem ein relativ großer Anteil von Kohlenstoff eingelagert ist. Die Kohlenstoffketten bilden zwischen zwei Elektroden eine elektrische Verbindung, die einen ohmschen Widerstand darstellt. Bei einer bestimmten Stromstärke lösen sich die Kohlenstoff- oder Polymerketten auf, und das Element wird selbsttätig hochohmig, ähnlich wie ein temperaturabhängiger Widerstand mit positivem Temperaturkoeffizienten, ein sogenannter PTC. Wenn der Strom wieder abnimmt, wird das Element selbsttätig wieder niederohmig. Grundsätzlich kann zur Strombegrenzung auch eine Halbleiterschaltung verwendet werden. Diese enthält zum Beispiel einen im Weg der Sensorleitung liegenden Transistor, der oberhalb eines bestimmten Stromwertes, dargestellt durch einen Spannungsabfall an einem im Stromweg liegenden Widerstand, weniger leitend gesteuert oder gesperrt wird.

Für die Steuerung der Relaiswicklung gibt es grundsätzlich zwei Möglichkeiten. Bei der sogenannten "Low Side"-Ansteuerung ist ein erster mit der Relaiswicklung verbundener Anschluß des Relaisbauteils fest mit einer Betriebsspannung verbunden, während ein zweiter mit der Relaiswicklung verbundener Anschluß des Relaisbauteils für die Betätigung des Arbeitskontaktes über eine Steuerschaltung an Erde oder einen sonstigen Referenzpunkt anschaltbar ist. Bei dieser Lösung können eine Klemme des Arbeitskontaktes und eine Klemme der Relaiswicklung innerhalb des Relaisbauteils mit demselben Anschluß des Relaisbauteils verbunden sein. Durch diese Doppelausnutzung eines Anschlusses des Relaisbauteils kann somit ein Anschluß an dem Relaisbauteil eingespart werden.

Die Erfindung wird im folgenden anhand der beigefügten Zeichnung an zwei Ausführungsbeispielen erläutert. In der Zeichnung zeigen:
- Fig. 1: ein erstes Ausführungsbeispiel der Erfindung mit einer ersten Art der Ansteuerung der Relaiswicklung und
- Fig. 2: eine Abwandlung der Schaltung von Fig. 1 mit einer zweiten Art der Ansteuerung der Relaiswicklung.

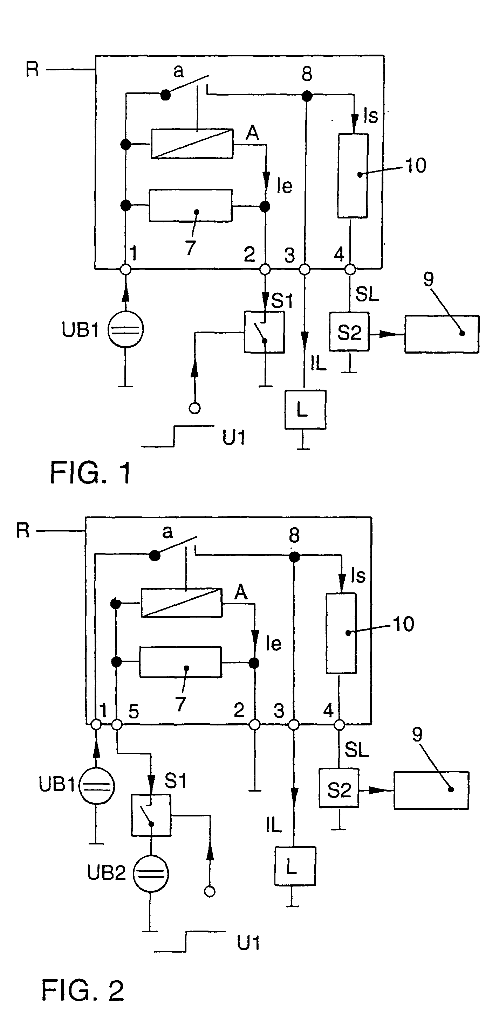

Fig. 1 zeigt ein Relaisbauteil R. Die Relaiswicklung A ist an Anschlüsse 1 und 2 und der Arbeitskontakt a an Anschlüsse 1 und 3 des Bauteils R angeschlossen. Parallel zu der Relaiswicklung A liegt ein sogenannter Freilaufwiderstand oder eine Freilaufdiode 7. Dieses Element dient dazu, ein verzögertes Abschalten des Relais sowie ein Schwingverhalten aufgrund der beim Abschalten des Relaisstroms induzierten Spannung zu verhindern. Der Anschluß 1 ist fest mit einer Betriebsspannungsquelle UB1 und der Anschluß 2 über eine als Schalter dargestellte Steuerschaltung S1 mit Erde verbunden. An den Anschluß 3 ist die durch das Relaisbauteil R ein- und abzuschaltende Last L angeschlossen. Zum Einschalten des durch die Last L fließenden Stroms lL betätigt eine Steuerspannung U1 die Steuerschaltung 1, die dann den Anschluß 2 mit Erde verbindet, so daß ein Erregerstrom le durch die Relaiswicklung A fließt und der Arbeitskontakt a geschlossen wird. Die soweit dargestellten Leitungen für den Laststrom lL und den Erregerstrom le haben Leitungsquerschnitte in der Größenordnung von 10 mm².

Zur Überwachung der einwandfreien Arbeitsweise des Relaisbauteils R ist an die Klemme 8 des Relaiskontakts a eine Sensorleitung SL angeschlossen, die zu einer Steuerschaltung S2 führt. Die Steuerschaltung S2 überwacht die Spannung an der Klemme 8. Wenn zum Beispiel bei Betätigung des Relaisbauteils R zum Schließen des Kontaktes a an der Klemme 8 keine Spannung registriert wird, gibt die Steuerschaltung S2 ein Steuersignal an eine Auswertschaltung 9. Diese kann zum Beispiel eine Fehleranzeige auslösen, in einen auftretende Fehler speichernden Rechner eingegeben werden oder den Fahrer auffordern, unverzüglich eine Werkstatt aufzusuchen. Die Sensorleitung SL hat einen Querschnitt in der Größenordnung von 0,35 mm². Um einen zu hohen Strom durch die Sensorleitung SL durch die bei geschlossenem Kontakt a an der Klemme 8 auftretende Betriebsspannung UB1 zu vermeiden, ist in das Relaisbauteil R das strombegrenzende Schaltungselement 10 zwischen der Klemme 8 und dem Anschluß 4 eingefügt, zum Beispiel ein normaler ohmscher Widerstand, ein stromabhängiger Widerstand, ein temperaturabhängiger Widerstand oder der genannte Polyswitch. Ein ohmscher Widerstand für das Schaltungselement kann zum Beispiel einen Wert von 570 Ohm aufweisen. Die Einfügung eines Widerstandes in die Sensorleitung SL in dieser Größenordnung bringt keinen Nachteil, weil die Sensorleitung SL im wesentlichen lediglich zum Abfragen einer Spannung dient und keinen oder keinen nennenswerten Strom führt. Der Eingang der Steuerschaltung S2 ist entsprechend hochohmig ausgebildet und stellt für den Anschluß 4 praktisch keine Last dar. Das Element 10 begrenzt den durch die Sensorleitung SL fließenden Strom ls. Selbst wenn die Spannung UB1 von der Klemme 8 an der Sensorleitung anliegt und der Anschluß 4 gegen Erde kurzgeschlossen wird, kann nur ein Strom ls in der Größenordnung von einigen Milliampere fließen, der für die Sensorleitung SL keine Gefahr darstellt.

Eine Besonderheit der Schaltung nach Fig. 1 besteht darin, daß eine Klemme der Relaiswicklung A und eine Klemme des Relaiskontaktes a innerhalb des Bauteils R mit demselben Anschluß 1 verbunden sind. Durch diese Zusammenlegung innerhalb des Bauteils R und Doppelnutzung eines Anschlusses kann in vorteilhafter Weise ein Anschluß des Bauteils R eingespart werden.

Fig. 2 zeigt im Prinzip das Relaisbauteil R und die periphere Schaltung gemäß Fig. 1 mit folgender Abwandlung: Eine Klemme des Arbeitskontaktes a und der Erregerwicklung A sind an getrennte Anschlüsse 1 und 5 des Relaisbauteils R angeschlossen. Im Gegensatz zu Fig. 1 ist der Anschluß 2 geerdet, während der Anschluß 5 über die Steuerschaltung S1 mit einer Betriebsspannungsquelle UB2 verbunden ist. Diese Art der Ansteuerung der Relaiswicklung A wird auch mit "High Side"-Ansteuerung bezeichnet. Sie ist vorteilhaft, wenn die Betriebsspannung für den Hauptstrom durch die Last L und die Betriebsspannung zur Steuerung der Relaiswicklung von verschiedenen Spannungsquellen stammen oder die Spannungsquellen galvanisch voneinander getrennt sein sollen.

Die dargestellten Bauteile, nämlich die Relaiswicklung A, der Arbeitskontakt a, der Freilaufwiderstand oder die Freilaufdiode 7 und das stromabhängige Schaltungselement 10 sind vorzugsweise in einem Gehäuse enthalten, das in den Figuren durch die punktiert gezeichnete Umrandung dargestellt ist. Das Gehäuse enthält auf einer Außenseite die dargestellten Anschlüsse 1 bis 4 bzw. 1 bis 5, zum Beispiel in Form von sogenannten Anschlußpins zum Einstecken in eine gedruckte Leiterplatte.

### BEZUGSZEICHENLISTE

- 1: Anschluß
- 2: Anschluß
- 3: Anschluß
- 4: Anschluß
- 5: Anschluß
- 7: Freilaufdiode
- 8: Klemme
- 9: Auswerteschaltung
- 10: Schaltungselement
- R: Relaisbauteil
- A: Relaiswicklung
- a: Arbeitskontakt
- UB1, UB2: Betriebsspannungsquelle
- S1, S2: Steuerschaltung
- L: Last
- IL: Laststrom

## Patentansprüche

1. Relaisbauteil mit ersten Anschlüssen (1, 3) für einen durch einen Arbeitskontakt (a) zu schaltenden Strom (lL), zweiten Anschlüssen (1, 2) zur Steuerung der Relaiswicklung (A) und einem dritten Anschluss (4) für eine Sensorleitung (SL) wobei das Bauteil (R) ein strombegrenzendes Schaltungselement (10) enthält, **dadurch gekennzeichnet, dass** die Sensorleitung (SL) zum Überwachen der von einer Stellung des Arbeitkontaktes abhängigen Spannung an einer Klemme des Arbeitkontaktes dient und dass ein erster Anschluss des strombegrenzenden Schaltungselements mit der Klemme (8) des Arbeitskontaktes (a) und ein zweiter Anschluss des strombegrenzenden Schaltungselements mit dem dritten Anschluss (4) derart verschaltet ist, dass eine an dem dritten Anschluss (4) abgreifbare Spannung abhängig von der Stellung des Arbeitskontaktes (a) ist.

2. Relaisbauteil nach Anspruch 1, **dadurch gekennzeichnet, dass** das Schaltungselement (10) durch einen Widerstand gebildet ist.

3. Relaisbauteil nach Anspruch 2, **dadurch gekennzeichnet, dass** der Widerstand einen Wert in der Größenordnung von 500 -1000 Ohm aufweist.

4. Relaisbauteil nach Anspruch 1, **dadurch gekennzeichnet, dass** das Schaltungselement (10) durch ein stromabhängiges Element gebildet ist, das in einem unteren Strombereich relativ niederohmig ist und in einem höheren Strombereich selbsttätig hochohmig wird.

5. Relaisbauteil nach Anspruch 1, **dadurch gekennzeichnet, dass** eine Klemme des Arbeitskontaktes (a) und eine Klemme der Relaiswicklung (A) mit demselben Anschluss (1) des Relaisbauteils (R) verbunden sind.

6. Relaisbauteil nach Anspruch 1, **dadurch gekennzeichnet, dass** ein erster mit der Relaiswicklung (A) verbundener Anschluss (1) des Relaisbauteils (R) fest mit einer Betriebsspannung (UB1) verbunden und ein zweiter mit der Relaiswicklung (A) verbundener Anschluss (2) des Relaisbauteils (R) für die Betätigung des Arbeitskontaktes (a) über eine Steuerschaltung (S1) an Erde anschaltbar ist.

7. Relaisbauteil nach Anspruch 1, **dadurch gekennzeichnet, dass** ein erster mit der Relaiswicklung (A) verbundener Anschluss (5) des Relaisbauteils (R) für die Betätigung des Arbeitskontaktes (a) an eine Betriebsspannung (UB2) anschaltbar und ein zweiter mit der Relaiswicklung (A) verbundener Anschluss (2) des Relaisbauteils (R) mit Erde verbunden ist.

8. Relaisbauteil nach Anspruch 1, **dadurch gekennzeichnet, dass** die Relaiswicklung (A), der Arbeitskontakt (a) und das strombegrenzende Schaltungselement (10) in einem Gehäuse enthalten sind, das an seiner Außenseite die genannten Anschlüsse (1-5) trägt.

## Claims

1. Relay component having first connections (1, 3) for a current (IL) which can be switched by a make contact (a), having second connections (1, 2) for controlling the relay winding (A), and having a third connection (4) for a sensor line (SL), with the component (R) containing a current-limiting circuit element (10), **characterized in that** the sensor line (SL) is used for monitoring the voltage (which is dependent on the position of the make contact) at a terminal of the make contact, and **in that** a first connection of the current-limiting circuit element is connected to the terminal (8) of the make contact (a), and a second connection of the current-limiting circuit element is connected to the third connection (4), such that a voltage which can be tapped off at the third connection (4) is dependent on the position of the make contact (a).

2. Relay component according to Claim 1, **characterized in that** the circuit element (10) is formed by a resistor.

3. Relay component according to Claim 2, **characterized in that** the resistor has a value in the order of magnitude from 500 to 1000 ohms.

4. Relay component according to Claim 1, **characterized in that** the circuit element (10) is formed by a current-dependent element, which has a relatively low impedance in a lower current range, and automatically becomes high impedance in a higher current range.

5. Relay component according to Claim 1, **characterized in that** one terminal of the make contact (a) and one terminal of the relay winding (A) are connected to the same connection (1) of the relay component (R).

6. Relay component according to Claim 1, **characterized in that** a first connection (1), which is connected to the relay winding (A), of the relay component (R) is permanently connected to an operating voltage (UB1), and a second connection (2), which is connected to the relay winding (A), of the relay component (R) can be connected to earth via a control circuit (S1) in order to operate the make contact (a).

7. Relay component according to Claim 1, **characterized in that** a first connection (5), which is connected to the relay winding (A), of the relay component (R) can be connected to an operating voltage (UB2) for operating the make contact (a) and a second connection (2), which is connected to the relay winding (A), of the relay component (R) is connected to earth.

8. Relay component according to Claim 1, **characterized in that** the relay winding (A), the make contact (a) and the current-limiting circuit element (10) are contained in a housing, which is fitted with said connections (1-5) on its outside.

## Revendications

1. Module de relais muni de premières bornes (1, 3) pour un courant (IL) à commuter par un contact travail (a), de deuxièmes bornes (1, 2) pour commander la bobine du relais (A) et d'une troisième borne (4) pour une ligne de détection (SL), le module (R) contenant un élément de commutation (10) à limitation du courant, **caractérisé en ce que** la ligne de détection (SL) sert à contrôler la tension à une borne du contact travail, laquelle dépend d'une position du contact travail et qu'une première borne de l'élément de commutation à limitation du courant est connectée à la borne (8) du contact travail (a) et une deuxième borne de l'élément de commutation à limitation du courant est connectée à la troisième borne (4) de telle manière qu'une tension qui peut être prélevée sur la troisième borne (4) dépende de la position du contact travail (a).

2. Module de relais selon la revendication 1, **caractérisé en ce que** l'élément de commutation (10) est formé par une résistance.

3. Module de relais selon la revendication 2, **caractérisé en ce que** la résistance a une valeur de l'ordre de 500 à 1000 ohms.

4. Module de relais selon la revendication 1, **caractérisé en ce que** l'élément de commutation (10) est formé par un élément dépendant du courant qui présente une résistance relativement faible dans la plage de courant inférieure et prend automatiquement une résistance élevée dans une plage de courant plus élevée.

5. Module de relais selon la revendication 1, **caractérisé en ce qu'**une borne du contact travail (a) et une borne de la bobine du relais (A) sont reliées à la même borne (1) du module de relais (R).

6. Module de relais selon la revendication 1, **caractérisé en ce qu'**une première borne (1) du module de relais (R) reliée à la bobine du relais (A) est reliée à demeure à une tension de service (UB1) et une deuxième borne (2) du module de relais (R) reliée à la bobine du relais (A) peut être commutée à la terre par le biais d'un circuit de commande (S1) pour actionner le contact travail (a).

7. Module de relais selon la revendication 1, **caractérisé en ce qu'**une première borne (5) du module de relais (R) reliée à la bobine du relais (A) peut être commutée à la tension de service (UB2) pour actionner le contact travail (a) et une deuxième borne (2) du module de relais (R) reliée à la bobine du relais (A) est reliée à la terre.

8. Module de relais selon la revendication 1, **caractérisé en ce que** la bobine du relais (A), le contact travail (a) et l'élément de commutation (10) à limitation du courant sont logés dans un boîtier qui comporte lesdites bornes (1 à 5) sur son côté extérieur.
